**Europäisches Patentamt**

**European Patent Office**

**Office européen des brevets**

(19)

(11) Veröffentlichungsnummer: **0 070 410**
**B1**

(12) # EUROPÄISCHE PATENTSCHRIFT

(45) Veröffentlichungstag der Patentschrift:
**03.07.85**

(21) Anmeldenummer: **82105575.3**

(22) Anmeldetag: **24.06.82**

(51) Int. Cl.⁴: **B 61 B 3/02, B 61 B 13/02,**
**B 60 C 7/24, B 60 B 19/00**

(54) **Elektrohängebahn.**

(30) Priorität: **21.07.81 DE 3128824**

(43) Veröffentlichungstag der Anmeldung:
**26.01.83 Patentblatt 83/4**

(45) Bekanntmachung des Hinweises auf die Patenterteilung:
**03.07.85 Patentblatt 85/27**

(84) Benannte Vertragsstaaten:
**AT CH FR IT LI**

(56) Entgegenhaltungen:
**DE - A - 2 750 453**
**DE - C - 323 345**
**DE - C - 380 045**
**FR - A - 2 291 875**
**GB - A - 2 060 530**

(73) Patentinhaber: **Uttscheid, Georg, Madronstrasse 17,**
**D-8201 Rosenheim (DE)**

(72) Erfinder: **Uttscheid, Georg, Madronstrasse 17,**
**D-8201 Rosenheim (DE)**

(74) Vertreter: **Wächtershäuser, Günter, Dr., Tal 29,**
**D-8000 München 2 (DE)**

ACTORUM AG

## Beschreibung

Die Erfindung betrifft eine Elektrohängebahn mit einer Horizontalstrecken und Steigungs- und Gefällstrecken umfassenden Laufschiene, mit den Steigungs- und Gefällstrecken zugeordneten Zahnstangen- oder Kettenabschnitten und mit Hängefahrzeugen, deren jedes einen eigenen Antriebsmotor aufweist, der mindestens eine auf der Laufschiene abrollende tragende Antriebslaufrolle und mindestens ein mit den Zahnstangen- bzw. Kettenabschnitten kämmendes Ritzel mit gleicher Winkelgeschwindigkeit antreibt.

Eine solche Elektrohängebahn ist aus der DE-A-2750453 bekannt. Dabei dient die Antriebslaufrolle sowohl zum Antrieb des Hängefahrzeugs als auch zum Tragen der Last. Auf Horizontalstrecken ist das Ritzel funktionslos. Hingegen greift es auf Steigungsstrecken oder Gefällstrecken in dort parallel zu Laufschiene vorgesehene Zahnstangenverzahnungen oder Ketten ein. Falls das Ritzel mit einer Kette kämmt, ist es als Kettenrad ausgebildet. Es wird also auf diesen Steigungs- und Gefällstrecken der Antrieb vom Ritzel übernommen, während die Last nach wie vor je nach Steilheit der Strecke teilweise von der Antriebslaufrolle übernommen wird. Es können mit dieser Einrichtung beliebig steile und sogar vertikale Steigungs- und Gefällstrecken überwunden werden. Dabei sind Gegendruckrollen und Führungsrollen vorgesehen, welche das Ritzel in Eingriff mit der Zahnstangenverzahnung bzw. der Kette halten.

Da das Ritzel und die Laufrolle mit gleicher Winkelgeschwindigkeit angetrieben werden, ist man daher bestrebt, zur Vermeidung von unterschiedlichen Bahngeschwindigkeiten den Aussendurchmesser der Antriebslaufrolle gleich dem Teilkreisdurchmesser des Ritzels zu wählen. Dabei muss natürlich die Zahnstangenverzahnung bzw. die Kette in zweckentsprechender Weise relativ zur Laufschiene angeordnet werden. Es hat sich nun jedoch in der Praxis gezeigt, dass diese Bedingungen nicht mit hinreichender Genauigkeit erfüllbar sind. Zunächst einmal bestehen mehr oder weniger grosse Fertigungstoleranzen hinsichtlich des Aussendurchmessers des Antriebslaufrades bzw. des Teilkreisdurchmessers des Ritzels sowie hinsichtlich der Relativposition zwischen Laufschiene und Zahnstangenverzahnung bzw. Kette. Aber selbst bei genauester Fertigung und Montage kommt es schon nach relativ kurzer Betriebsdauer zu signifikanten Abweichungen. Da etwa 95% der Streckenführung horizontal erfolgt, wird die Antriebslaufrolle wesentlich stärker abgenutzt als das Ritzel, so dass der Aussendurchmesser der Antriebslaufrolle in zunehmendem Masse geringer wird als der Teilkreisdurchmesser des Ritzels. Darüber hinaus kann häufig die Zahnstangenverzahnung bzw. die Kette nicht in der idealen Positionbeziehung relativ zur Lauffläche der Laufschiene angeordnet werden. Aus allen diesen Gründen treten in der Praxis bei gleicher Winkelgeschwindigkeit des Antriebslaufrades und des starr hiermit verbundenen Ritzels erhebliche Unterschiede der Bahngeschwindigkeit auf. Diese können bei einer Umdrehung des Antriebslaufrades z.B. 27 mm betragen.

In den Steigungs- und Gefällabschnitten, in denen das Antriebslaufrad kraftschlüssig an der Laufschiene und das Ritzel formschlüssig an der Zahnstangenverzahnung bzw. der Kette angreift, kommt es daher zu einem erheblichen Abrieb der Laufschiene bzw. des Antriebslaufrades. Ausserdem kommt es durch den intermittierenden Eingriff der Zähne des Ritzels in die Zahnstangenverzahnung bzw. die Kette zu einer intermittierenden Entlastung und Belastung des Antriebslaufrades. Diese Erscheinungen führen insbesondere bei schweren Lasten zu einer erheblichen Kaltverformung der Aussenfläche des Antriebslaufrades und der Lauffläche der Laufschiene und zwar entsprechend der Teilung des Ritzels bzw. der Zahnstangenverzahnung oder Kette. Die Druckbeaufschlagung erfolgt nämlich stets an den gleichen Stellen des Antriebslaufrades und der Laufschiene. Es stellt sich schon nach relativ kurzer Betriebsdauer sowohl auf der Lauffläche der Laufschiene in Steigungs- und Gefällbereich als auch auf der Aussenfläche der Antriebslaufrolle eine Querriffelung oder ein Wellenprofil ein. Die Querriefelung der Antriebslaufrolle führt zu einem holperigen Lauf in den Horizontalstrecken. Dies ist mit erheblicher Geräuschbelästigung verbunden sowie mit Vibrationen, welche zum Herabfallen der transportierten Teile führen können.

Ein weiterer Nachteil der herkömmlichen Elektrohängebahn besteht darin, dass bei Verwendung von starr miteinander verbundenen koaxialen und somit mit gleicher Winkelgeschwindigkeit angetriebenen Antriebslaufradpaaren auch in Kurvenbereichen ein erheblicher Schlupf zustande kommt.

Es ist somit Aufgabe der vorliegenden Erfindung, eine Elektrohängebahn der eingangs genannten Art derart weiterzubilden, dass es in Steigungs- und Gefällstrecken sowie in Kurven in geringerem Mass zu Abrieberscheinungen und zu Riefelungen der Laufflächen der Laufschiene und der Antriebslaufrollen durch Kaltdeformationen kommt.

Diese Aufgabe wird erfindungsgemäss dadurch gelöst, dass die Antriebslaufrolle ein mit der Antriebsrolle verbundenes Laufrad und einen auf der Peripherie des Laufrads im Gleitlagersitz drehbar aber unverschiebbar gelagerten Laufring umfasst.

Vorteilhafte Weiterbildungen gehen aus den Unteransprüchen hervor.

Im folgenden wird die Erfindung anhand von Zeichnungen näher erläutert. Es zeigen

Fig. 1 eine erste Ausführungsform der Erfindung und

Fig. 2 eine zweite Ausführungsform der Erfindung.

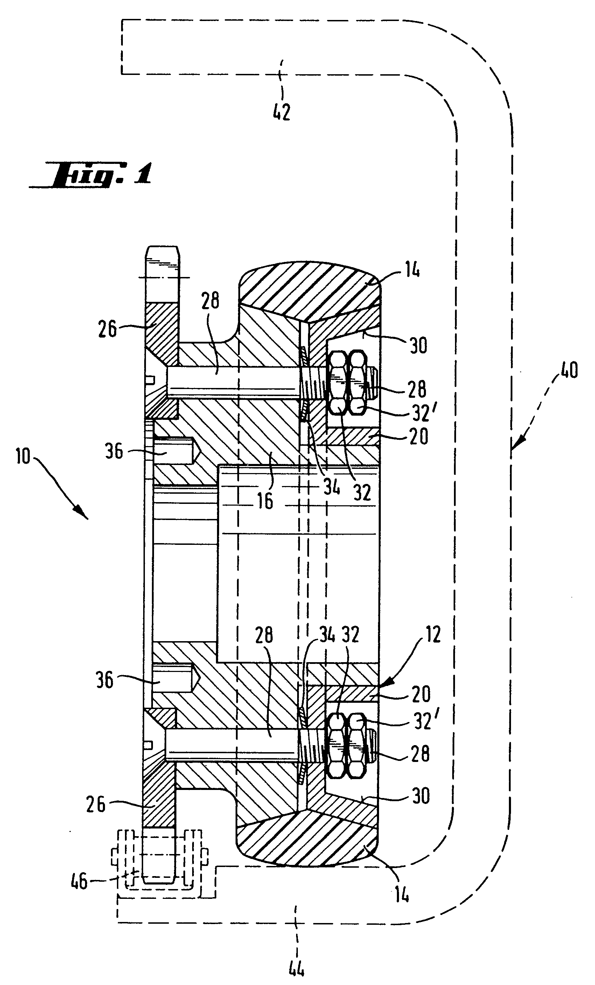

Zunächst soll die Ausführungsform gemäss Fig. 1 erläutert werden.

Die allgemein mit 10 bezeichnete Antriebslaufrolle besteht aus einem inneren Laufrad 12 und einem äusseren Laufring 14. Der Laufring 14 besteht aus Metall oder vorzugsweise aus einem Kunststoff, z.B. aus Teflon oder einem Polyamid.

Der Kunststoff kann mit einem Füllstoff, z.B. mit Glasfasern verstärkt sein. Bei einer bevorzugten Ausführungsform besteht der Laufring 14 aus Polyamid 6.6 mit etwa 30% Glasfasern. Dieses Material weist eine ausreichende Härte und Festigkeit für den Transport geringerer Lasten auf. Die Aussenperipherie des Laufrings 14 ist leicht gewölbt, so dass der Laufring nur punktuell an einer ebenen Laufschiene angreift. Die Innenfläche des Laufrings 14 ist als Doppelkegelfläche ausgebildet, wobei die Scheitellinie in der Mitte zwischen den beiden Seitenflächen des Laufrings liegt. Die beiden Kegelflächen bilden vorzugsweise einen stumpfen Winkel, welcher im Bereich von 95 bis 175°, vorzugsweise im Bereich von 120 bis 160° und speziell bei etwa 150° liegt.

Das Laufrad 12 ist in zwei scheibenförmige Bauteile getrennt, und zwar entlang einer Ebene, welche mit der Ebene der Scheitellinie der Doppelkegelinnenfläche des Laufrings 14 annähernd zusammenfällt. Das eine Laufradbauteil ist als Laufradkörper 16 ausgebildet und das andere als Laufradring 20. Der Laufradring 20 liegt in einer entsprechenden Ausnehmung des Laufradkörpers 16. Auf der gegenüberliegenden Seite des Laufradkörpers ist eine weitere ringförmige Abstufung vorgesehen, in die ein Ritzelring 26 eingelegt ist. Der Ritzelring 26, der Laufradkörper 16 und der Laufradring 20 weisen je eine Vielzahl von miteinander fluchtenden Bohrungen auf. Durch diese Bohrungen erstrecken sich Schrauben 28, auf deren in einer Ringnut 30 des Laufradrings 20 liegenden freie Enden Muttern 32 aufgeschraubt sind. Zwischen dem Laufradkörper 16 und dem Laufradring 20 befindet sich eine Feder 34. Der Laufradkörper 16 und der Laufradring 20 bilden gemeinsam eine Aussenperipherie des Laufrades von Doppelkegelgestalt, welche der Doppelkegelgestalt des Laufrings 14 entspricht. Ferner weist der Laufradkörper 16 Bohrungen 36 auf, die der Kupplung mit dem Motorantrieb dienen.

Zum Zusammenbau dieser Antriebslaufrolle werden zunächst die Schrauben 28 in die entsprechenden Bohrungen des Ritzelringes 26 eingeführt. Sodann wird der Laufradkörper 16 aufgesetzt, so dass sich die freien Enden der Schrauben 28 durch die Bohrungen desselben erstrecken. Nun wird der Laufring 14 auf die kegelförmige Aussenfläche des Laufradkörpers 16 aufgesetzt. Danach wird die Feder 34 eingelegt. Sodann wird der Laufradring 20 in die Ausnehmung des Laufradkörpers 16 eingelegt und zwar derart, dass sich die freien Enden der Schrauben 28 durch die entsprechenden Bohrungen des Laufradrings 20 erstrecken. Danach werden die Muttern 32 auf die freien Enden der Schrauben 28 aufgeschraubt. Durch das Anziehen der Muttern 32 wird die Feder 34 unter Spannung gesetzt. Hierdurch kann der Reibungsschluss zwischen dem Laufring 14 einerseits und dem Laufradkörper 16 bzw. dem Laufradring 20 andererseits eingestellt werden. Auf die Muttern 32 können noch Gegenmuttern 32' aufgeschraubt werden.

Die vorstehend beschriebene Antriebslaufrolle ist für eine Laufschiene in Form eines aufrecht stehenden U-Profils 40 vorgesehen, welches einen oberen horizontalen Schenkel 42 und einen unteren horizontalen Schenkel 44 aufweist. Die Antriebslaufrolle rollt auf der Innenfläche des unteren horizontalen Schenkels 44 ab. An der Innenfläche des oberen horizontalen Schenkels 42 greifen Gegendruckrollen an, welche nicht gezeigt sind. Die Seitenstabilität wird durch nicht dargestellte seitlich angreifende Führungsrollenpaare erreicht. Die Figur zeigt einen Querschnitt durch die Laufschiene im Bereich einer Steigung oder eines Gefälles. In sämtlichen Steigungs- oder Gefällbereichen der Laufschiene sind Zahnstangenverzahnungen oder Ketten 46 vorgesehen, welche wie dargestellt in einer Vertiefung des unteren horizontalen Schenkels 44 befestig sind und zwar derart, dass das Ritzel bei Übergang von einer Horizontalstrecke in eine Steigungs- oder Gefällstrecke in die Zahnstangenverzahnung oder die Kette einläuft.

Es ist bevorzugt, den Aussendurchmesser des Laufrings 14 und den Teilkreisdurchmesser des Ritzelringes 26 so weit wie möglich einander anzugleichen. Und die Zahnstangenverzahnung in entsprechender Positionsbeziehung zur Laufffläche der Laufschiene anzuordnen. In der Praxis sind jedoch besonders nach längerem Gebrauch Abweichungen von diesen idealen Verhältnissen unvermeidbar und diese Abweichungen führen zu einer Differenz zwischen der Bahngeschwindigkeit des Ritzelringes und der Bahngeschwindigkeit der Antriebslaufrolle, welche beide mit gleicher Winkelgeschwindigkeit angetrieben werden. Eine Kaltverformung der Antriebslaufrolle und der Laufschiene wird jedoch vermieden, da die aufgrund der unterschiedlichen Bahngeschwindigkeit in Steigungs- und Gefällbereichen auftretenden Kräfte die Haftreibung zwischen Laufring 14 und Laufrad 12 übersteigen, so dass der Laufring 14 sich relativ zum Laufrad 12 dreht. Dabei wird aufgrund des doppelkegelförmigen Profils stets eine Zentrierung gewährleistet.

Auf geraden Strecken ist der Ritzelring wirkungslos. Hier erfolgt die Kraftübertragung ausschliesslich durch Kraftschluss zwischen Laufrad 12 und Laufring 14 einerseits und zwischen Laufring 14 und der Fläche der Laufschiene andererseits. Es hat sich gezeigt, dass der Reibungsschluss zwischen Laufring 14 und Laufrad 12 derart eingestellt werden kann, dass einerseits bei Horizontalbetrieb eine einwandfreie Antriebskraftübertragung auf den Laufring 14 gewährleistet ist, während andererseits bei Steigungs- oder Gefällbetrieb etwa auftretende Bahngeschwindigkeitsdifferenzen durch einen Schlupf zwischen Laufring 14 und Laufrad 12 kompensiert werden können.

Bei einer vereinfachten Ausführungsform kann die Feder 34 weggelassen werden. Bei einer weiteren Ausführungsform ist der Ritzelring 26 nicht mit dem Laufradkörper 16 verschraubt. Es ist vielmehr gesondert mit der Antriebswelle des Antriebsmotors verbunden und kämmt mit einer Zahnstangenverzahnung oder einer Kette, welche neben der Laufschiene angeordnet ist. Bei einer weiteren Ausführungsform können Antriebslaufrolle und Ritzelring auf gegenüberliegenden Seiten des Antriebsmotors vorgesehen sein. Anstelle der in der Figur gezeigten Antriebslaufrolle kann auch ein Antriebslaufrollenpaar vorgesehen sein, bei dem beide Antriebslaufrollen starr miteinander und mit einem Ritzel verbunden sind. In diesem Falle kann eine Laufschiene bestehend aus zwei aufrecht stehenden U-Profilen oder aus einem Doppel-T-Profil verwendet werden. Bei dieser Ausführungsform ergibt sich der zusätzliche Vorteil, dass in Kurvenbereichen ein erhöhter Abrieb durch Schlupferscheinungen vermieden wird.

Bei den bisher beschriebenen Ausführungsformen ist die Kontaktfläche zwischen Laufring 14 und Laufrad 12 als Doppelkegelfläche ausgebildet. Der Laufring 14 kann jedoch auch jede andere konvexe Innenfläche aufweisen, wobei das Laufrad 12 eine entsprechende konkave Aussenperipherie aufweist. Die Innenfläche des Laufrings 14 und die Aussenfläche des Laufrades 12 können auch als Zylinderflächen ausgebildet sein. Dabei muss jedoch der Laufring 14 durch Flansche an einer axialen Verschiebung gehindert werden. Bisher wurde die Erfindung für eine Antriebslaufrolle beschrieben, deren Laufring 14 eine ballige Aussenfläche aufweist und für eine ebene Laufschiene ausgebildet ist. Bei einer abgewandelten Ausführungsform kann die Lauffläche der Laufschiene auch als Winkelprofil ausgebildet sein, wobei naturgemäss die Lauffläche des Laufrings 14 eine entsprechende Ringnut mit V-Gestalt aufweist. Alternativ kann die Laufschiene auch als Rundprofil ausgebildet sein, wobei der Laufring 14 eine entsprechende Ringnut mit halbrundem Querschnitt aufweist. Schliesslich kann der Laufring 14 anstelle der dargestellten konvexen Aussenfläche auch eine zylindrische Aussenfläche aufweisen oder eine konkave Aussenfläche, welche mit einer konvexen Lauffläche der Laufschiene zusammenwirkt.

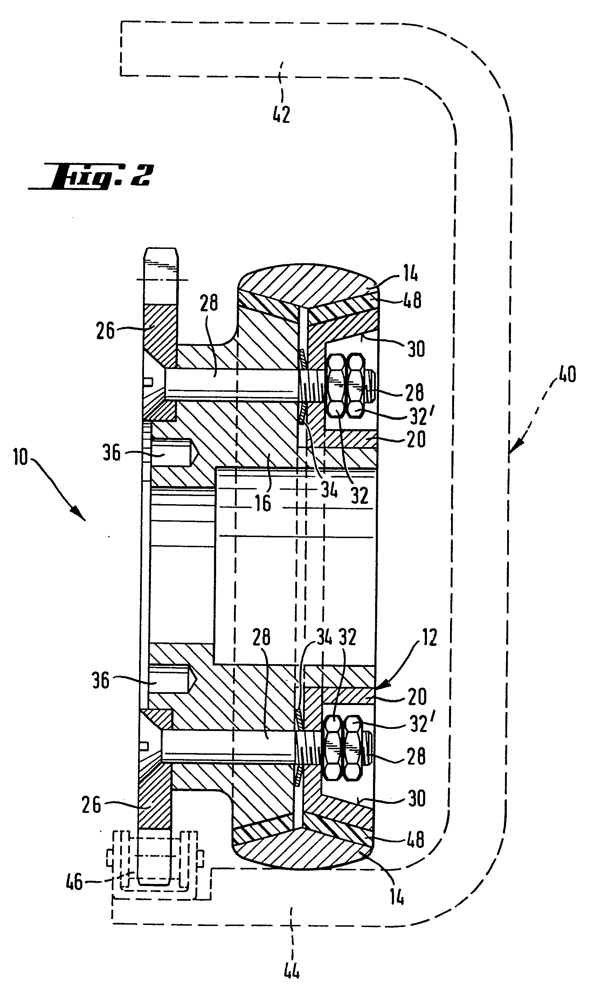

Die bisher beschriebenen Ausführungsformen sind für geringere Lasten ausgelegt. Bei schweren Lasten zeigt der aus Kunststoff bestehende Laufring 14 keine ausreichende Härte und Festigkeit. In diesem Fall verwendet man die abgewandelte Ausführungsform der Antriebslaufrolle gemäss Fig. 2. Dabei ist der Laufring 14 aus Stahl gefertigt. Er hat eine Innenfläche von Doppelkegelform, welche der Doppelkegelaussenfläche des Laufrades genau entspricht. Dabei ist jedoch der Innendurchmesser des Laufrings 14 nicht gleich dem Aussendurchmesser des Laufrades 14 (im Scheitelbereich), wie bei der Ausführungsform im unteren Teil der Figur, sondern es besteht eine beträchtliche Durchmesserdifferenz. In dem verbleibenden Zwischenraum sind zwei Konushülsen 48 eingelegt, welche aus einem Lagerwerkstoff und insbesondere aus Kunststoff bestehen können. Es kommen die gleichen Kunststoffmaterialien in Frage wie bei dem vorstehend beschriebenen aus Kunststoff bestehenden Laufring 14. Bei einer bevorzugten Ausführungsform entspricht die Kontur der Innenperipherie des Laufrings 14 genau der Kontur der Aussenperipherie des Laufrades 14, so dass die Konushülsen 48 eine gleichförmige Dicke über ihre gesamte Axialerstreckung aufweisen. Bei einer abgewandelten Ausführungsform kann die Dicke der Konushülsen 48 zur Mitte hin zunehmen. Dies wirkt sich besonders günstig auf eine Kraftübertragung durch Kraftschluss vom Laufrad 12 auf die Konushülsen 48 und von diesen auf den Laufring 14 aus. Bei einer Belastung werden nämlich die Konushülsen 48 nach innen aufeinanderzu gedrückt. Hierdurch erhöht sich der Kraftschluss. Dies ist günstig für die Kraftübertragung bei Horizontalbetrieb. Beim Zusammenbau dieser Antriebslaufrolle wird auf die Kegelfläche des Laufradkörpers 16 zunächst eine Konushülse 48 aufgelegt. Danach wird der Konusring 14 aufgesetzt. Sodann wird die zweite Konushülse 48 eingelegt und schliesslich wird der Laufradring 20 eingelegt. Danach erfolgt die Verschraubung mit den Schrauben 28 und den Muttern 32 und zwar wiederum mit oder ohne eine zwischengelegte Feder.

Bei den bisher beschriebenen Ausführungsformen der Erfindung kann es im Anfahrbetrieb und im Bremsbetrieb, insbesondere bei grossen Lasten zu einer verzögerten Drehmomentübertragung durch Schlupf zwischen Laufring 14 und Laufrad 12 kommen. Zur Überwindung dieser Schwierigkeiten kann man eine nicht dargestellte Kupplungseinrichtung verwenden, welche wahlweise eine Kupplung mit dem Laufradkörper 16 alleine oder sowohl mit dem Laufradkörper 16 als auch mit dem Laufring 14 herbeiführt. Mit einer solchen z.B. magnetisch gesteuerten Kupplung lässt sich die Anfahrcharakteristik bzw. Bremscharakteristik verbessern.

Bei einer abgewandelten Ausführungsform kann man anstelle einer einzigen Zahnstangenverzahnung oder einer einzigen Kette Zahnstangenverzahnungen bzw. Ketten vorsehen, deren Teilungen eine Phasenverschiebung gegeneinander, vorzugsweise um 180° aufweisen. In diesem Falle sind naturgemäss auch zwei Ritzel mit entsprechender Phasenverschiebung vorgesehen. Man kann auch zusätzlich zu der Zahnstangenverzahnung oder der Kette am unteren horizontalen Schenkel 44 der Laufschiene eine weitere Zahnstangenverzahnung oder Kette am oberen horizontalen Schenkel 42 der Laufschiene vorsehen, mit der ein zweites Ritzel kämmt, wobei die beiden Ritzel gegensinnig angetrieben werden.

Zur Verbesserung des Anfahrverhaltens und des Bremsverhaltens, insbesondere zur Verhinderung eines Nachlaufens kann auch eine Bremsvorrichtung vorgesehen sein, welche am Laufradkörper 16 vorgesehen ist und am Laufring 14 angreift, z.B. in Form einer magnetisch betätigten Scheibenbremse.

## Patentansprüche

1. Elektrohängebahn mit einer Horizontalstrecken und Steigungs- und Gefällstrecken umfassenden Laufschiene (40) mit den Steigungs- und Gefällstrecken zugeordneten Zahnstangen- oder Kettenabschnitten (46) und mit Hängefahrzeugen, deren jedes einen eigenen Antriebsmotor aufweist, der mindestens eine auf der Laufschiene abrollende tragende Antriebslaufrolle (10) und mindestens ein mit den Zahnstangen- oder Kettenabschnitten kämmendes Ritzel (Ritzelring 26) mit gleicher Winkelgeschwindigkeit antreibt, dadurch gekennzeichnet, dass die Antriebslaufrolle (10) ein mit der Antriebswelle verbundenes Laufrad (12) und einen auf der Peripherie des Laufrades (12) im Gleitlagersitz in Umfangsrichtung drehbar aber quer dazu unverschiebbar gelagerten Laufring (14) umfasst.

2. Elektrohängebahn nach Anspruch 1, dadurch gekennzeichnet, dass der Laufring (14) aus Kunststoff ausgebildet ist.

3. Elektrohängebahn nach Anspruch 1, dadurch gekennzeichnet, dass der Laufring (14) aus Metall besteht.

4. Elektrohängebahn nach Anspruch 3, dadurch gekennzeichnet, dass zwischen dem Laufrad (12) und dem Laufring (14) eine Hülse (48) aus Kunststoff oder einem Lagerwerkstoff angeordnet ist.

5. Elektrohängebahn nach einem der Ansprüche 2 oder 4, dadurch gekennzeichnet, dass der Kunststoff Teflon oder ein Polyamid ist und gegebenenfalls mit Glasfasern verstärkt ist.

6. Elektrohängebahn nach einem der Ansprüche 1 bis 5, dadurch gekennzeichnet, dass die Aussenperipherie des Laufrades (12) konkav und die Innenperipherie des Laufringes (14) konvex ausgebildet ist.

7. Elektrohängebahn nach Anspruch 6, dadurch gekennzeichnet, dass die Hülse (48) eine an die konkave Aussenperipherie des Laufrades (12) angepasste konvexe Innenperipherie und eine an die konvexe Innenperipherie des Laufringes (14) angepasste konkave Aussenperipherie aufweist.

8. Elektrohängebahn nach einem der Ansprüche 6 oder 7, dadurch gekennzeichnet, dass die konkaven bzw. konvexen Peripherien als Doppelkegelflächen ausgebildet sind.

9. Elektrohängebahn nach Anspruch 8, dadurch gekennzeichnet, dass das Laufrad (12) aus zwei miteinander verschraubten Scheiben (Laufradkörper 16, Laufradring 20) besteht, in deren Berührungsfläche die Scheitellinie der Doppelkegelperipheriefläche liegt.

10. Elektrohängebahn nach einem der Ansprüche 7 bis 9, dadurch gekennzeichnet, dass die Hülse (48) an ihrer Scheitellinie in zwei Ringe getrennt ist.

11. Elektrohängebahn nach einem der Ansprüche 7 bis 10, dadurch gekennzeichnet, dass der radiale Abstand zwischen Laufring (14) und Laufrad (12) über die gesamte Axialerstreckung gleich ist oder von den beiden Seitenflächen zur Mitte hin zunimmt.

12. Elektrohängebahn nach einem der Ansprüche 9 oder 10, dadurch gekennzeichnet, dass zwischen den Scheiben (Laufradkörper 16, Laufradring 20) des Laufrades (12) Federn (34) zur Einstellung des Reibungsschlusses zwischen Laufrad (12) und Laufring (14) vorgesehen sind.

## Revendications

1. Monorail suspendu électrique comprenant un rail de roulement (40) comportant des sections horizontales et des sections ascendantes et descendantes, des tronçons de crémaillères ou de chaînes (46) conjugués aux sections ascendantes et descendantes, et des véhicules suspendus dont chacun comporte son propre moteur de propulsion, qui entraîne au moins un galet d'entraînement porteur (10) roulant sur le rail de roulement et au moins un pignon (anneau formant pignon 26) engrenant avec les tronçons de crémaillères ou de chaînes, avec la même vitesse angulaire, caractérisé en ce que le galet d'entraînement (10) comprend une roue (12) reliée à l'arbre d'entraînement et un anneau de roulement (14) monté sur la périphérie de la roue (12) à la manière d'un montage par palier lisse de façon à pouvoir tourner dans le sens circonférentiel mais à être empêché de se déplacer transversalement à celui-ci.

2. Monorail suspendu électrique suivant la revendication 1, caractérisé en ce que l'anneau de roulement (14) est en matière plastique.

3. Monorail suspendu électrique suivant la revendication 1, caractérisé en ce que l'anneau de roulement (14) est en métal.

4. Monorail suspendu électrique suivant la revendication 3, caractérisé en ce qu'une douille (48) en matière plastique ou en un matériau pour coussinets est disposée entre la roue (12) et l'anneau de roulement (14).

5. Monorail suspendu électrique suivant la revendication 2 ou 4, caractérisé en ce que la matière plastique est du Téflon ou un polyamide et est renforcée éventuellement par des fibres de verre.

6. Monorail suspendu électrique suivant l'une quelconque des revendications 1 à 5, caractérisé en ce que la périphérie extérieure de la roue (12) a une forme concave, tandis que la périphérie intérieure de l'anneau de roulement (14) a une forme convexe.

7. Monorail suspendu électrique suivant la revendication 6, caractérisé en ce que la douille (48) a une périphérie intérieure convexe adaptée à la périphérie extérieure concave de la roue (12), et une périphérie extérieure concave adaptée à la périphérie intérieure convexe de l'anneau de roulement (14).

8. Monorail suspendu électrique suivant la revendication 6 ou 7, caractérisé en ce que les périphéries concaves ou convexes se présentent sous forme de surfaces en double cône.

9. Monorail suspendu électrique suivant la revendication 8, caractérisé en ce que la roue (12) est formée de deux disques réunis ensemble par vissage (corps de roue 16, jante 20), la ligne de crête de la surface périphérique en forme de double cône se trouvant dans le plan de la surface de contact de ces deux disques.

10. Monorail suspendu électrique suivant l'une quelconque des revendications 7 à 9, caractérisé en ce que la douille (48) est subdivisée en deux anneaux par sa ligne de crête.

11. Monorail suspendu électrique suivant l'une quelconque des revendications 7 à 10, caractérisé en ce que l'écartement radial entre l'anneau de roulement (14) et la roue (12) est le même sur toute l'étendue axiale, ou bien va en croissant depuis les deux faces latérales en direction du milieu.

12. Monorail suspendu électrique suivant la revendication 9 ou 10, caractérisé en ce que des ressorts (34) sont prévus entre les disques (corps de roue 16, jante 20) de la roue (12) pour le réglage de la liaison par friction entre la roue (12) et l'anneau de roulement (14).

## Claims

1. Motor-driven overhead trolley conveyor with a runway rail (40) comprising horizontal sections and inclined sections and with rack or chain sections (46) associated to the inclined rail sections and with trolleys, each of which comprises its own motor drive, which drives with equal angular velocity at least one load carrying drive roller (10) rolling on the rail and at least one gear (gear ring 26) meshing with the rack or chain sections, characterized in that the drive roller (10) comprises a drive wheel (12) connected with the drive shaft and a ring (14), which is mounted in a slide bearing fashion on the periphery of the drive wheel (12) so as to be rotatable in the circumferential direction but unshiftable in a cross direction thereof.

2. Conveyor according to Claim 1, characterized in that the ring (14) consists of plastic.

3. Conveyor according to Claim 1, characterized in that the ring (14) consists of metal.

4. Conveyor according to Claim 3, characterized in that a sleeve (48) of plastic or bearing material is inserted between the drive wheel (12) and the ring (14).

5. Conveyor according to one of Claims 2 or 4, characterized in that said plastic is teflon or a polyamide which optionally is reinforced with glass fibers.

6. Conveyor according to one of Claims 1 to 5, characterized in that the outer periphery of the drive wheel (12) has a concave shape while the inner periphery of the ring (14) has a convex shape.

7. Conveyor according to Claim 6, characterized in that the sleeve (48) has a convex inner periphery adapted to the concave outer periphery of the drive wheel (12) and has a concave outer periphery adapted to the convex inner periphery of the ring (14).

8. Conveyor according to one of Claims 6 or 7, characterized in that the concave and convex peripheries have the shape of double-cone surfaces.

9. Conveyor according to Claim 8, characterized in that the drive wheel (12) consists of two discs bolted together (drive wheel body 16, drive wheel ring 20) the contacting surface forming the vertex of the double-cone-shaped periphery.

10. Conveyor according to one fo Claims 7 to 9, characterized in that the sleeve (48) is divided at its vertex into two rings.

11. Conveyor according to one of Claims 7 to 10, characterized in that the radial distance between the ring (14) and the drive wheel (12) is the same over the total axial extension or is increased from both side surfaces towards the center.

12. Conveyor according to one of Claims 9 or 10, characterized in that between the discs (drive wheel body 16, drive wheel ring 20) of the drive wheel (12) springs (34) are provided for adjusting the frictional engagement between the drive wheel (12) and the ring (14).

Fig. 1

**Fig. 2**